# EUROPÄISCHE PATENTSCHRIFT

(11) **EP 3 845 325 B1**
(45) Veröffentlichungstag und Bekanntmachung des Hinweises auf die Patenterteilung: **17.07.2024**
(21) Anmeldenummer: 20216905.8
(22) Anmeldetag: 23.12.2020
(51) Int. Cl.: B21D 26/14, H01M 50/00, B21D 28/02

(54) **VORRICHTUNG UND VERFAHREN ZUR HERSTELLUNG EINES DÜNNWANDIGEN BAUTEILS**
DEVICE AND METHOD FOR PRODUCING A THIN WALL COMPONENT
DISPOSITIF ET PROCÉDÉ DE FABRICATION D'UN COMPOSANT À PAROI MINCE

(30) Priorität: 06.01.2020 DE 102020100102
(43) Veröffentlichungstag der Anmeldung: 07.07.2021
(73) Patentinhaber: VOLKSWAGEN AKTIENGESELLSCHAFT, 38440 Wolfsburg (DE)
(72) Erfinder: Grau, Frederik, 38124 Braunschweig (DE); Jamadar, Kartik, 38442 Wolfsburg (DE); Theuerkauf, Christian, 38114 Braunschweig (DE)
(74) Vertreter: Rössler, Matthias

(56) Entgegenhaltungen:
- WO-A1-2019/151635
- WO-A2-99/33591
- DE-A1- 1 809 070
- DE-B3- 10 337 769
- KR-B1- 101 504 478
- US-A1- 2005 217 334

## Beschreibung

Die vorliegende Erfindung ist auf eine Vorrichtung und auf ein Verfahren zur Herstellung eines dünnwandigen Bauteils gerichtet. Das Bauteil ist insbesondere eine Aluminium aufweisende Folie, insbesondere eine Verbundfolie aus Aluminium-Laminat. Das Bauteil wird insbesondere als Gehäuse für eine Pouch-Zelle eingesetzt. Das Gehäuse dient der Einhausung eines Zellstapels umfassend Elektroden und Separatoren.

Folien aus Aluminium-Laminat für Pouch-Zellen weisen eine schlechte Tiefziehfähigkeit auf. Dabei können Risse und Falten in den durch die Umformung hoch beanspruchten Teilbereichen der Folie auftreten. Weiterhin kann mit dem konventionellen Tiefziehen nur eine geringe Taktzeit erreicht werden. Zudem verursacht die Reibung zwischen Tiefziehstempel und Folie einen hohen Energieverlust. Die Schritte Tiefziehen und das Abtrennen von Teilbereichen erfolgt regelmäßig in separaten Prozessen, so dass ein aufwändiges Material-Handling und lange Prozesszeiten erforderlich sind.

Diesen Nachteilen wurden bisher mit den folgenden Maßnahmen begegnet: Erhöhung des Aluminiumanteils in der Folie, wobei damit Materialkosten und Gewicht der Folie steigen; Erhöhung der Temperatur der Folie beim Umformen, wobei damit die Prozesskosten steigen und die Qualität des Aluminium-Laminats beeinträchtigt wird; Tuschierung der Blechhalter beim Tiefziehen, wobei diese Maßnahme zeitaufwändig ist.

Aus der US 2005/0217334 A1 ist ein Verfahren zur Herstellung einer Brennstoffzellenplatte bekannt. Die dafür verwendete Vorrichtung umfasst einen elektromagnetischen Aktuator und eine Matrize. Zwischen Matrize und Aktuator wird ein Folienmaterial angeordnet, dass eine elektrische Leitfähigkeit aufweist. Der Aktuator erzeugt ein Magnetfeld, durch das eine Spannung in dem Folienmaterial induziert wird. Infolge der dabei erzeugten Lorentzkraft wird das Folienmaterial weg von dem Aktuator und hin zur Matrize beschleunigt. Aufgrund der hohen Geschwindigkeit des Folienmaterials wird dieses bei Auftreffen der Matrize umgeformt. Dabei zeigt das Folienmaterial hyper-plastisches Verhalten.

Aus der US 2013/0086961 A1 ist ein Verfahren zum Verschweißen zweier Bauteile bekannt. Die Bauteile werden miteinander in Kontakt gebracht. Das eine Bauteil wird mit einem elektrischen Puls beaufschlagt.

Aus der WO 99/33591 A1, auf welche der Oberbegriff des Patentanspruchs 1 basiert, ist eine Vorrichtung zur elektromagnetischen Hochenergieimpulsumformung von Blechen bekannt.

Aufgabe der vorliegenden Erfindung ist es, die mit Bezug auf den Stand der Technik angeführten Probleme zumindest teilweise zu lösen. Insbesondere soll die Herstellung eines dünnwandigen Bauteils durch die Nutzung elektromagnetischer Kräfte ermöglicht werden. Die Bauteile sollen reproduzierbar und/oder mit besonders hoher Qualität herstellbar sein, wobei ggf. auch eine kostengünstige Fertigung realisierbar sein soll.

Zur Lösung dieser Aufgaben trägt eine Vorrichtung mit den Merkmalen gemäß Patentanspruch 1 sowie ein Verfahren gemäß Patentanspruch 5 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Vorrichtung zur Herstellung eines dünnwandigen Bauteils aus einem Ausgangsteil vorgeschlagen. Die Vorrichtung umfasst zumindest
- einen ersten Spulenkörper, dessen elektrischer Leiter zumindest in einer Ebene angeordnet ist,
- eine elektrische Schaltung zur Bereitstellung eines impulsförmigen elektrischen Stroms, mit dem der elektrische Leiter des ersten Spulenkörpers beaufschlagbar ist,
- eine Matrize mit einer dem ersten Spulenkörper zugewandten Auflage für ein umzuformendes Ausgangsteil, wobei die Auflage die zu erzeugende Form des Bauteils aufweist, sowie
- eine erste Trennvorrichtung, mit der ein erster Teilbereich von einem zweiten Teilbereich des Ausgangsteils zumindest teilweise trennbar ist.

Die Vorrichtung ist so ausgeführt bzw. eingerichtet, dass das Ausgangsteil zwischen dem ersten Spulenkörper und der Matrize anordenbar ist, durch eine zwischen dem ersten Spulenkörper und dem Ausgangsteil wirkende elektromagnetische Kraft hin zur Matrize beschleunigbar ist und dabei durch die Auflage umformbar und durch die erste Trennvorrichtung zumindest teilweise trennbar ist.

Insbesondere erzeugt der durch die elektrische Schaltung bereitgestellte impulsförmige elektrische Strom in dem ersten Spulenkörper ein Magnetfeld, das wiederum einen elektrischen Strom in dem Ausgangsteil induziert. Damit wird eine Lorentzkraft zwischen dem Ausgangsteil und dem ersten Spulenkörper erzeugt, durch die das Ausgangsteil oder Teile des Ausgangsteils hin zur Matrize beschleunigt wird. Die so erreichte hohe Geschwindigkeit des Ausgangsteils ermöglicht eine Umformung des Ausgangsteils durch die Matrize, also die Anpassung der Form des Ausgangsteils an die Form der Auflage.

Der impulsförmige elektrische Strom wird insbesondere über einen elektrischen Kondensator der elektrischen Schaltung bereitgestellt. Insbesondere wird der Kondensator nach jeder, zumindest teilweisen, Entladung wieder aufgeladen.

Als Ausgangsteil wird insbesondere eine Aluminiumverbundfolie bzw. eine Aluminium-Laminat-Folie eingesetzt. Das Ausgangsteil kann zudem verschiedene Kunststoffe, insbesondere als Schicht bzw. Laminat, umfassen.

Neben der Umformung des Ausgangsteils erfolgt hier insbesondere zusätzlich noch ein zumindest teilweises Trennen von Teilbereichen des Ausgangsteils. Insbesondere umfasst das zumindest teilweise Trennen ein Abtrennen eines Teilbereichs des Ausgangsteils, z. B. ein Lochen oder das Entfernen eines Randbereichs.

Die Kombination von Prozessschritten in der Vorrichtung, nämlich des Umformens und des Trennens, ermöglicht insbesondere eine kostengünstige Herstellung. Dabei entfällt insbesondere das Handling des Ausgangsteils zwischen dem Umformprozess und dem Trennprozess. Auf der anderen Seite entfällt ein genaues Ausrichten eines bereits korrekt getrennten aber noch nicht umgeformten Ausgangsteils bzw. eines umgeformten aber noch nicht getrennten Ausgangsteils. Somit verbessert sich ebenfalls die Qualität des Bauteils.

Gegenüber dem bekannten Tiefziehen wird bei dieser Vorrichtung bzw. bei dem damit möglichen Verfahren, bei dem das Ausgangsteil durch einen impulsförmigen elektrischen Strom bewegt wird, wenig Energie verbraucht.

Das Ausgangsteil erreicht bei der Beschleunigung hin zur Matrize insbesondere eine Geschwindigkeit von mehr als 100 m/s [Meter pro Sekunde]. Insbesondere nimmt das Material des Ausgangsteils dabei einen viskoplastischen Zustand an, so dass das Umformverhalten des Materials verbessert wird. Als viskoplastisches Verhalten bezeichnet man ein teilweise plastisches, teilweise viskoses Materialverhalten. Viskoplastische Stoffe vereinigen also Merkmale von Festkörpern und Flüssigkeiten in sich und sind somit besser umformbar. Insbesondere weist die erste Trennvorrichtung eine umlaufend ausgeführte Trennkante auf, so dass die Trennkante den ersten Teilbereich vollumfänglich umschließt und der erste Teilbereich von dem zweiten Teilbereich abtrennbar ist. Mit der Trennkante, auch als Schneidkante zu bezeichnen, werden die Teilbereiche voneinander getrennt. D. h., dass mit Hilfe Trennkante das Bauteil beschnitten wird und damit neue Teilbereiche definiert werden.

Insbesondere umschließt die Trennkante die Auflage vollumfänglich. Insbesondere bildet so der erste Teilbereich das Bauteil, wobei der zweite Teilbereich z. B. als Materialrest entsorgt wird. Insbesondere umfasst die Vorrichtung eine Art Materialrutsche, durch die der abgetrennte zweite Teilbereich aus der Vorrichtung selbsttätig, z. B. unter Einfluss der Schwerkraft, abgeführt werden kann.

Die erste Trennvorrichtung kann auch mehrere Trennkanten aufweisen, so dass mehrere Teilbereiche gebildet werden, die zumindest teilweise von anderen Teilbereichen getrennt oder vollständig abgetrennt werden.

In einer Ausführungsform die nicht unter den Gegenstand des Schutzbegehrens fällt ist die Trennkante der ersten Trennvorrichtung ortsfest an der Matrize angeordnet. Insbesondere wird das Ausgangsteil infolge des impulsförmigen elektrischen Stroms an die Matrize gedrückt, wobei dabei das Ausgangsteil auch gegen die Trennkante gedrückt wird und damit der Trennvorgang erfolgt. Damit kann das Umformen und das Trennen insbesondere zeitlich parallel erfolgen.

Insbesondere ist die Trennkante beweglich ausgeführt und wird zusammen mit dem Ausgangsteil durch den gleichen impulsförmigen elektrischen Strom hin zur Matrize beschleunigt. Dafür muss das Ausgangsteil zwischen Matrize auf der einen Seite und erstem Spulenkörper sowie erster Trennvorrichtung auf der anderen Seite angeordnet sein.

Gemäß einer erfindungsgemäßen ersten Ausgestaltung umfasst die Vorrichtung zusätzlich zumindest einen zweiten Spulenkörper, durch den die erste Trennvorrichtung hin zur Matrize bewegbar ist. Insbesondere kann so die erste Trennvorrichtung unabhängig vom Ausgangsteil bewegbar sein. Der Leiter des zweiten Spulenkörpers ist in einer gemeinsamen Ebene mit dem Leiter des ersten Spulenkörpers angeordnet. Insbesondere ist der zweite Spulenkörper innerhalb oder außerhalb des ersten Spulenkörpers angeordnet.

Insbesondere sind weitere Spulenkörper vorgesehen, so dass weitere Trennvorrichtungen zeitlich versetzt voneinander oder zeitlich parallel hin zur Matrize bewegbar sind.

Gemäß einer erfindungsgemäßen (alternativen) zweiten Ausgestaltung umfasst die Vorrichtung zumindest einen zweiten Spulenkörper und eine zweite Trennvorrichtung, wobei die zweite Trennvorrichtung durch den zweiten Spulenkörper hin zur Matrize bewegbar ist. Insbesondere ist die erste Trennvorrichtung an der Matrize angeordnet.

Die Trennvorrichtungen sind so angeordnet, dass die am Ausgangsteil gebildeten Schnittlinien der Trennvorrichtungen im korrekten Abstand zueinander positioniert sind. Alternativ oder zusätzlich wirken die beweglich angeordnete zweite Trennvorrichtung und die an der Matrize angeordnete erste Trennvorrichtung zusammen und bilden eine zumindest teilweise oder vollständig gemeinsame Schnittlinie am Ausgangsteil.

Insbesondere umfasst der zweite Spulenkörper den ersten Spulenkörper vollumfänglich und die elektrischen Leiter der Spulenkörper sind in der gemeinsamen Ebene angeordnet, wobei die elektrische Schaltung so ausgeführt ist, dass die Spulenkörper nur nacheinander mit dem impulsförmigen elektrischen Strom beaufschlagbar sind. Damit kann die elektrische Schaltung sehr einfach und kostengünstig aufgebaut sein, wobei wechselweise zwischen dem ersten Spulenkörper und dem zweiten Spulenkörper umgeschaltet wird.

Es wird weiter ein Verfahren zur Herstellung eines dünnwandigen Bauteils aus einem Ausgangsteil mit einer Vorrichtung vorgeschlagen. Die Vorrichtung ist die bereits beschriebene Vorrichtung. Die Vorrichtung umfasst zumindest
- einen ersten Spulenkörper, dessen elektrischer Leiter zumindest in einer Ebene angeordnet ist,
- eine elektrische Schaltung zur Bereitstellung eines impulsförmigen elektrischen Stroms, mit dem der elektrische Leiter des ersten Spulenkörpers beaufschlagbar ist,
- eine Matrize mit einer dem ersten Spulenkörper zugewandten Auflage für ein umzuformendes Ausgangsteil, wobei die Auflage die zu erzeugende Form des Bauteils aufweist, sowie
- eine erste Trennvorrichtung, mit der ein erster Teilbereich von einem zweiten Teilbereich des Ausgangsteils zumindest teilweise trennbar ist.

Das Verfahren zur Herstellung des Bauteils umfasst zumindest die folgenden Schritte:
a) Anordnen eines Ausgangsteils zwischen dem ersten Spulenkörper und der Matrize;
b) Beaufschlagen des ersten Spulenkörpers mit dem impulsförmigen elektrischen Strom und Erzeugen einer elektromagnetischen Kraft zwischen dem ersten Spulenkörper und dem Ausgangsteil, so dass das Ausgangsteil hin zur Matrize beschleunigbar ist;
c) Umformen des Ausgangsteils; und
d) zumindest teilweise Trennen des Ausgangsteils.

Die obige, insbesondere nicht abschließende, Einteilung der Verfahrensschritte in a) bis d) soll vorrangig nur zur Unterscheidung dienen und keine Reihenfolge und/oder Abhängigkeit erzwingen. Auch die Häufigkeit der Verfahrensschritte z. B. während der Einrichtung und/oder des Betriebes der Vorrichtung kann variieren. Ebenso ist möglich, dass Verfahrensschritte einander zumindest teilweise zeitlich überlagern. Ganz besonders bevorzugt finden die Verfahrensschritte c) und d) zeitlich parallel oder zumindest teilweise zeitlich parallel zueinander und nach den Schritten a) und b) statt. Die Schritte c) und d) können auch nacheinander und in unterschiedlicher Reihenfolge durchgeführt werden. Insbesondere werden zumindest die Schritte a) und b) in der angeführten Reihenfolge durchgeführt, wobei die Schritte c) und d) zeitlich nach den Schritten a) und b) durchgeführt werden.

Die Schritte c) und d) können (zumindest teilweise) zeitlich parallel bzw. gleichzeitig durchgeführt werden. Insbesondere findet Schritt d) während Schritt c) statt.

Die Schritte c) und d) können zeitlich versetzt durchgeführt werden, wobei Schritt c) durch einen ersten impulsförmigen elektrischen Strom und Schritt d) durch einen zeitlich versetzten zweiten impulsförmigen elektrischen Strom durchgeführt wird.

Insbesondere wird das Ausgangsteil als Endlosmaterial bereitgestellt, so dass das Bauteil aus dem als Bandmaterial bereitgestellten Ausgangsteil herstellbar ist. Alternativ wird das Ausgangsteil vorgeschnitten, wobei die im Verfahren abgetrennten Teilbereiche des Ausgangssteil als Materialrest aus der Vorrichtung abgeführt werden.

Insbesondere wird das Ausgangsteil in Schritt a) auf der Matrize bzw. auf der Auflage angeordnet.

Für die Durchführung des Schrittes b) ist der erste Spulenkörper insbesondere ca. 30 Millimeter von dem Ausgangsteil bzw. von der Auflage entfernt angeordnet.

Insbesondere erzeugt der impulsförmige elektrische Strom eine Lorentzkraft von ca. 20 Kilonewton (abhängig von der Geometrie der verwendeten Komponenten). Infolge der Lorentzkraft wird das Ausgangsmaterial an die Auflage angeformt, so dass das Ausgangsmaterial die Form der Auflage annimmt.

Es ist zumindest ein Steuergerät vorgesehen, das zur Durchführung des beschriebenen Verfahrens ausgestattet, konfiguriert oder programmiert ist. Das Steuergerät ist insbesondere Bestandteil der Vorrichtung.

Weiter kann das Verfahren auch von einem Computer bzw. mit einem Prozessor des Steuergeräts ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens durchführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte des vorgeschlagenen Verfahrens auszuführen.

Es wird ein Bauteil zumindest mit der beschriebenen Vorrichtung oder durch das beschriebene Verfahren hergestellt, wobei das Bauteil eine Gehäusefolie für eine Pouch-Zelle ist oder zumindest teilweise ein Gehäuse für eine Pouch-Zelle bildet. Das Gehäuse bzw. die Gehäusefolie kann der Einhausung eines Zellstapels umfassend Elektroden und Separatoren dienen.

Es wird insbesondere die Verwendung der vorgeschlagenen Vorrichtung zur Herstellung einer Gehäusefolie für eine Pouch-Zelle aus einem dünnwandigen Bauteil vorgeschlagen.

Die Ausführungen zu dem Verfahren sind insbesondere auf die Vorrichtung, das Bauteil und/oder das computerimplementierte Verfahren (also den Computer bzw. den Prozessor, das System zur Datenverarbeitung, das computerlesbare Speichermedium) übertragbar und umgekehrt.

Die Vorrichtung bzw. das Verfahren ermöglicht insbesondere sehr hohe Prozessgeschwindigkeiten beim Umformen. Die Umformbarkeit des Materials des Ausgangsteils ist infolge des erzeugten viskoplastischen Verhaltens besser als beim konventionellen Tiefziehen.

Damit kann eine hohe Ziehtiefe erreicht werden. Das umgeformte Material des Ausgangsteils bzw. des Bauteils ist homogener verteilt. Eine Rückfederung des umgeformten Materials kann verringert werden. Die vorgeschlagene Umformung erfordert weniger Energie, da z. B. eine Reibung zwischen Stempel/ Blechhalter und Werkstück entfällt. Es tritt wenig Verschleiß an den verwendeten Werkzeugen (Trennvorrichtungen und Matrize) auf. Die Kosten für die Bereitstellung der Vorrichtung können verringert werden, da der Trennvorgang und der Umformvorgang nun in einer gemeinsamen Vorrichtung zusammengeführt sind.

Die Verwendung unbestimmter Artikel ("ein", "eine", "einer" und "eines"), insbesondere in den

Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist darauf hinzuweisen, dass die Figuren und insbesondere die dargestellten Größenverhältnisse nur schematisch sind. Es zeigen:
- Fig. 1:: eine erste Ausführungsvariante einer Vorrichtung gemäß dem Stand der Technik, die nicht unter den Gegenstand des Schutzbegehrens fällt;
- Fig. 2:: einen Teil der Vorrichtung nach Fig. 1 in einer Seitenansicht im Schnitt;
- Fig. 3:: eine zweite Ausführungsvariante einer Vorrichtung gemäß der Erfindung; und
- Fig. 4:: einen Teil der Vorrichtung nach Fig. 3 in einer Seitenansicht im Schnitt.

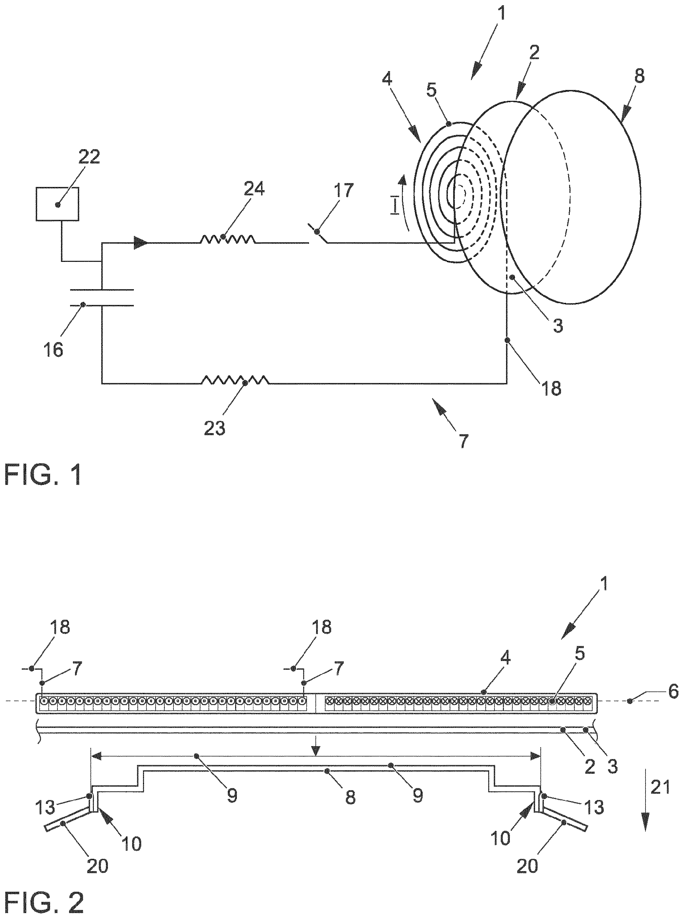

Die Fig. 1 zeigt eine erste Ausführungsvariante einer Vorrichtung 1 gemäß dem Stand der Technik, die nicht unter den Gegenstand des Schutzbegehrens fällt.

Fig. 2 zeigt einen Teil der Vorrichtung 1 nach Fig. 1 in einer Seitenansicht im Schnitt. Die Fig. 1 und 2 werden im Folgenden gemeinsam beschrieben.

Die Vorrichtung 1 umfasst einen ersten Spulenkörper 4, dessen elektrischer Leiter 5 in einer Ebene 6 angeordnet ist, eine elektrische Schaltung 7 zur Bereitstellung eines impulsförmigen elektrischen Stroms, mit dem der elektrische Leiter 5 des ersten Spulenkörpers 4 beaufschlagbar ist, eine Matrize 8 mit einer dem ersten Spulenkörper 4 zugewandten Auflage 9 für ein umzuformendes Ausgangsteil 3, wobei die Auflage 9 die zu erzeugende Form des Bauteils 2 aufweist, sowie eine erste Trennvorrichtung 10, mit der ein erster Teilbereich 11 von einem zweiten Teilbereich 12 des Ausgangsteils 3 abtrennbar ist.

Die Vorrichtung 1 ist so ausgeführt, dass das Ausgangsteil 3 zwischen dem ersten Spulenkörper 4 und der Matrize 8, insbesondere an der Matrize 8, anordenbar, durch eine zwischen dem ersten Spulenkörper 4 und dem Ausgangsteil 3 wirkende elektromagnetische Kraft zumindest teilweise hin zur Matrize 8 beschleunigbar und dabei durch die Auflage 9 umformbar und durch die erste Trennvorrichtung 10 durchtrennbar ist.

Die elektrische Schaltung 7 umfasst einen ersten Schaltkreis 18, in dem zumindest ein Induktor 24, ein Leistungswiderstand 23, ein Kondensator 16 sowie der erste Spulenkörper 4 angeordnet sind. Der elektrische Leiter 5 des ersten Spulenkörpers 4 weist mehrere Windungen auf.

Der durch die elektrische Schaltung 7 bereitgestellte impulsförmige elektrische Strom erzeugt in dem ersten Spulenkörper 4 ein Magnetfeld, das wiederum einen elektrischen Strom in dem Ausgangsteil 3 induziert. Damit wird eine Lorentzkraft zwischen dem Ausgangsteil 3 und dem ersten Spulenkörper 4 erzeugt, durch die das Ausgangsteil 3 zumindest teilweise hin zur Matrize 8 beschleunigt bzw. an die Form der Matrize 8 und der Auflage 9 angelegt wird. Die so erreichte hohe Geschwindigkeit des Ausgangsteils 3 ermöglicht eine Umformung des Ausgangsteils 3 durch die Matrize 8, also die Anpassung der Form des Ausgangsteils 3 an die Form der Auflage 9.

Neben der Umformung des Ausgangsmaterials 3 erfolgt zusätzlich ein Abtrennen eines zweiten Teilbereichs 12 von einem ersten Teilbereich 11. Das Abtrennen umfasst ein Einschneiden in das Ausgangsteil 3, wobei dieser Schnitt beabstandet von einem äußeren Rand des Ausgangsteil 3 angeordnet ist. Das Abtrennen umfasst hier das Entfernen des als Randbereich ausgeführten zweiten Teilbereichs 12.

Die erste Trennvorrichtung 10 weist eine umlaufend ausgeführte Trennkante 13 auf, so dass die Trennkante 13 den ersten Teilbereich 11 vollumfänglich umschließt und der erste Teilbereich 11 von dem zweiten Teilbereich 12 abtrennbar ist. Die Trennkante 13 umschließt die Auflage 9 vollumfänglich. Der erste Teilbereich 11 bildet das Bauteil 2, wobei der zweite Teilbereich 12 als Materialrest entsorgt wird. Dafür umfasst die Vorrichtung 1 eine Materialrutsche 20, durch die der abgetrennte zweite Teilbereich 12 aus der Vorrichtung 1 selbsttätig unter Einfluss der Schwerkraft 21 abgeführt wird.

Die Trennkante 13 der ersten Trennvorrichtung 10 ist ortsfest an der Matrize 8 angeordnet. Das Ausgangsteil 3 wird infolge des impulsförmigen elektrischen Stroms an die Matrize 8 gedrückt, wobei dabei das Ausgangsteil 3 auch gegen die Trennkante 13 gedrückt wird und damit der Trennvorgang erfolgt. Damit kann das Umformen und das Trennen zeitlich parallel erfolgen.

Über das Steuergerät 22 wird die elektrische Schaltung 7 angesteuert.

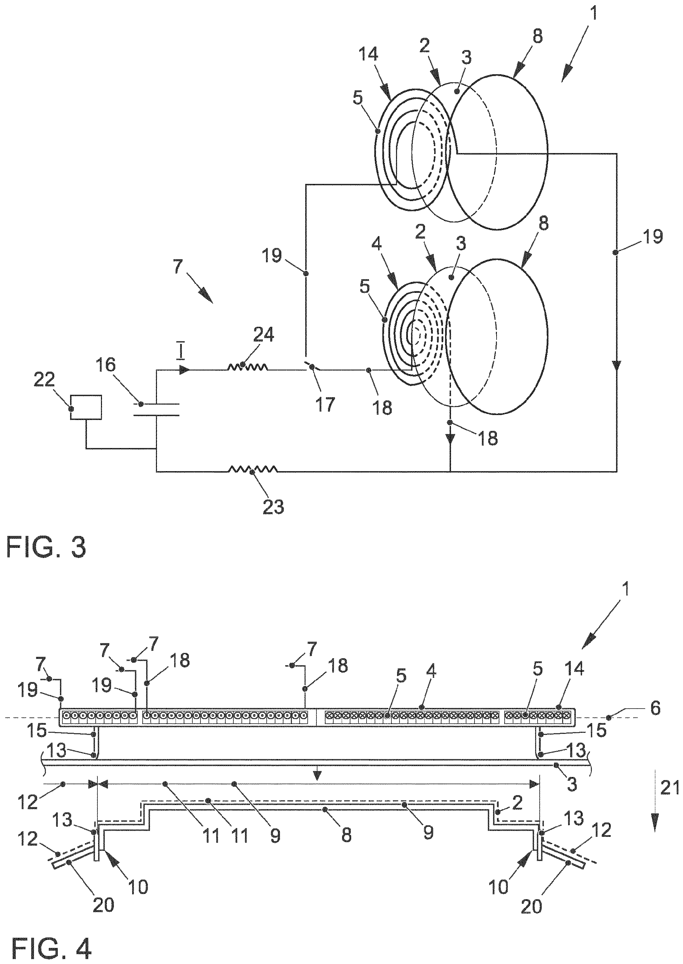

Fig. 3 zeigt eine zweite Ausführungsvariante einer Vorrichtung 1 gemäß der Erfindung. Fig. 4 zeigt einen Teil der Vorrichtung 1 nach Fig. 3 in einer Seitenansicht im Schnitt. Die Fig. 3 und 4 werden im Folgenden gemeinsam beschrieben. Auf die Ausführungen zu Fig. 1 und 2 wird Bezug genommen.

Im Unterschied zur ersten Ausführungsvariante umfasst hier die Vorrichtung 1 eine elektrische Schaltung 7 mit zusätzlich einem zweiten Schaltkreis 19. In dem zweiten Schaltkreis 19 ist ein zweiter Spulenkörper 14 angeordnet, wobei über einen Schalter 17 zwischen dem ersten Schaltkreis 18 und dem zweiten Schaltkreis 19 hin- und her geschaltet werden kann.

Die Vorrichtung 1 umfasst gemäß einer erfindungsgemäßen Alternative zusätzlich einen zweiten Spulenkörper 14 und eine zweite Trennvorrichtung 15, wobei die zweite Trennvorrichtung 15 durch den zweiten Spulenkörper 14 hin zur Matrize 8 bewegbar ist. Die erste Trennvorrichtung 10 ist an der Matrize 8 angeordnet.

Die Trennvorrichtungen 10, 15 sind so angeordnet, dass die beweglich angeordnete zweite Trennvorrichtung 15 und die an der Matrize 8 angeordnete erste Trennvorrichtung 10 mit ihren Trennkanten 13 zusammenwirken und dabei eine gemeinsame Schnittlinie am Ausgangsteil 3 ausbilden.

Der zweite Spulenkörper 14 umfasst den ersten Spulenkörper 4 vollumfänglich und die elektrischen Leiter 5 der Spulenkörper 4, 14 sind in der gemeinsamen Ebene 6 angeordnet, wobei die elektrische Schaltung 7 so ausgeführt ist, dass die Spulenkörper 4, 14 nur nacheinander mit dem impulsförmigen elektrischen Strom beaufschlagbar sind. Damit ist die elektrische Schaltung 7 sehr einfach und kostengünstig aufgebaut, wobei wechselweise zwischen dem ersten Spulenkörper 4 und dem zweiten Spulenkörper 14 umgeschaltet wird.

### Bezugszeichenliste

- 1: Vorrichtung
- 2: Bauteil
- 3: Ausgangsteil
- 4: erster Spulenkörper
- 5: Leiter
- 6: Ebene
- 7: Schaltung
- 8: Matrize
- 9: Auflage
- 10: erste Trennvorrichtung
- 11: erster Teilbereich
- 12: zweiter Teilbereich
- 13: Trennkante
- 14: zweiter Spulenkörper
- 15: zweite Trennvorrichtung
- 16: Kondensator
- 17: Schalter
- 18: erster Schaltkreis
- 19: zweiter Schaltkreis
- 20: Materialrutsche
- 21: Schwerkraft
- 22: Steuergerät
- 23: Leistungswiderstand
- 24: Induktor

## Patentansprüche

1. Vorrichtung (1) zur Herstellung eines dünnwandigen Bauteils (2) aus einem Ausgangsteil (3), zumindest umfassend
• einen ersten Spulenkörper (4), dessen elektrischer Leiter (5) zumindest in einer Ebene (6) angeordnet ist,
• eine elektrische Schaltung (7) zur Bereitstellung eines impulsförmigen elektrischen Stroms, mit dem der elektrische Leiter (5) des ersten Spulenkörpers (4) beaufschlagbar ist,
• eine Matrize (8) mit einer dem ersten Spulenkörper (4) zugewandten Auflage (9) für das umzuformende Ausgangsteil (3), wobei die Auflage (9) die zu erzeugende Form des Bauteils (2) aufweist, sowie
• eine erste Trennvorrichtung (10), mit der ein erster Teilbereich (11) von einem zweiten Teilbereich (12) des Ausgangsteils (3) zumindest teilweise trennbar ist,
wobei das Ausgangsteil (3) zwischen dem ersten Spulenkörper (4) und der Matrize (8) anordenbar, durch eine zwischen dem ersten Spulenkörper (4) und dem Ausgangsteil (3) wirkende elektromagnetische Kraft hin zur Matrize (8) beschleunigbar und dabei durch die Auflage (9) umformbar und durch die erste Trennvorrichtung (10) zumindest teilweise trennbar ist; **dadurch gekennzeichnet, dass** die Vorrichtung (1) zumindest einen zweiten Spulenkörper (14) umfasst, durch den die erste Trennvorrichtung (10) hin zur Matrize (8) bewegbar ist, oder dass die Vorrichtung (1) einen zweiten Spulenkörper (14) und eine zweite Trennvorrichtung (15) umfasst, wobei die zweite Trennvorrichtung (15) durch den zweiten Spulenkörper (14) hin zur Matrize (8) bewegbar ist.

2. Vorrichtung (1) nach Patentanspruch 1, wobei die erste Trennvorrichtung (10) eine umlaufend ausgeführte Trennkante (13) aufweist, so dass sie den ersten Teilbereich (11) vollumfänglich umschließt und der erste Teilbereich (11) von dem zweiten Teilbereich (12) abtrennbar ist.

3. Vorrichtung (1) nach Patentanspruch 2, wobei die Trennkante (13) die Auflage (9) vollumfänglich umschließt.

4. Vorrichtung (1) nach einem der vorhergehenden Patentansprüche, wobei die Vorrichtung (1) den zweiten Spulenkörper (14) und die zweite Trennvorrichtung (10) umfasst und wobei der zweite Spulenkörper (14) den ersten Spulenkörper (4) vollumfänglich umfasst und die elektrischen Leiter (5) der Spulenkörper (4, 14) in der gemeinsamen Ebene (6) angeordnet sind, wobei die elektrische Schaltung (7) so ausgeführt ist, dass die Spulenkörper (4, 15) nur nacheinander mit dem impulsförmigen elektrischen Strom beaufschlagbar sind.

5. Verfahren zur Herstellung eines dünnwandigen Bauteils (2) aus einem Ausgangsteil (3) mit einer Vorrichtung (1) nach einem der vorhergehenden Patentansprüche, wobei das Verfahren zumindest die folgenden Schritte umfasst
a) Bereitstellen des Ausgangsteils (3) und Anordnen des Ausgangsteils (3) zwischen dem ersten Spulenkörper (4) und der Matrize (5);
b) Beaufschlagen des ersten Spulenkörpers (4) mit dem impulsförmigen elektrischen Strom und Erzeugen einer elektromagnetischen Kraft zwischen dem ersten Spulenkörper (4) und dem Ausgangsteil (3), so dass das Ausgangsteil (3) hin zur Matrize (5) beschleunigt wird;
c) Umformen des Ausgangsteils (3) und
d) zumindest teilweise Trennen des Ausgangsteils (3).

6. Verfahren nach Patentanspruch 5, wobei die Schritte c) und d) zeitlich parallel durchgeführt werden.

7. Verfahren nach Patentanspruch 5, wobei die Schritte c) und d) zeitlich versetzt durchgeführt werden, wobei Schritt c) durch einen ersten impulsförmigen elektrischen Strom und Schritt d) durch einen zeitlich versetzten zweiten impulsförmigen elektrischen Strom durchgeführt wird.

## Claims

1. Device (1) for producing a thin-walled component (2) from a starting part (3), comprising at least
• a first coil body (4), the electrical conductor (5) of which is arranged at least in one plane (6),
• an electrical circuit (7) for providing a pulsed electrical current which can be applied to the electrical conductor (5) of the first coil body (4),
• a die (8) comprising a support (9) facing the first coil body (4) for the starting part (3) to be shaped, the support (9) having the shape of the component (2) to be produced, and
• a first separating device (10) by means of which a first sub-region (11) can be at least partially separated from a second sub-region (12) of the starting part (3),
it being possible to arrange the starting part (3) between the first coil body (4) and the die (8), to accelerate said starting part towards the die (8) by means of an electromagnetic force acting between the first coil body (4) and the starting part (3), and thus to shape said starting part by means of the support (9) and at least partially separate said starting part by means of the first separating device (10); **characterized in that** the device (1) comprises at least a second coil body (14) by means of which the first separating device (10) can be moved towards the die (8), or **in that** the device (1) comprises a second coil body (14) and a second separating device (15), it being possible to move the second separating device (15) towards the die (8) by means of the second coil body (14).

2. Device (1) according to claim 1, wherein the first separating device (10) has a peripheral separating edge (13), so that said edge completely encloses the first sub-region (11) and the first sub-region (11) can be separated from the second sub-region (12).

3. Device (1) according to claim 2, wherein the separating edge (13) completely encloses the support (9).

4. Device (1) according to any of the preceding claims, wherein the device (1) comprises the second coil body (14) and the second separating device (10), and wherein the second coil body (14) completely comprises the first coil body (4) and the electrical conductors (5) of the coil bodies (4, 14) are arranged in the same plane (6), wherein the electrical circuit (7) is designed such that the coil bodies (4, 15) can only be supplied with the pulsed electrical current one after the other.

5. Method for producing a thin-walled component (2) from a starting part (3) using a device (1) according to any of the preceding claims, wherein the method comprises at least the following steps
a) providing the starting part (3) and arranging the starting part (3) between the first coil body (4) and the die (5);
b) applying the pulsed electric current to the first coil body (4) and generating an electromagnetic force between the first coil body (4) and the starting part (3) so that the starting part (3) is accelerated towards the die (5);
c) shaping the starting part (3) and
d) at least partially separating the starting part (3).

6. Method according to claim 5, wherein steps c) and d) are carried out in parallel in time.

7. Method according to claim 5, wherein steps c) and d) are carried out offset in time, wherein step c) is carried out by a first pulsed electrical current and step d) is carried out by a temporally offset second pulsed electrical current.

## Revendications

1. Dispositif (1) pour la fabrication d'un composant (2) à paroi mince à partir d'une pièce de départ (3), comprenant au moins
• un premier corps de bobine (4) dont le conducteur électrique (5) est disposé au moins dans un plan (6),
• un circuit électrique (7) pour la fourniture d'un courant électrique en forme d'impulsions, par lequel courant le conducteur électrique (5) du premier corps de bobine (4) peut être sollicité,
• une matrice (8) comportant un support (9) tourné vers le premier corps de bobine (4) pour la pièce de départ (3) à former, dans lequel le support (9) présente la forme à produire du composant (2), ainsi que
• un premier dispositif de séparation (10), au moyen duquel une première zone partielle (11) peut être séparée au moins partiellement d'une seconde zone partielle (12) de la pièce de départ (3),
dans lequel la pièce de départ (3) peut être disposée entre le premier corps de bobine (4) et la matrice (8), peut être accélérée vers la matrice (8) par une force électromagnétique agissant entre le premier corps de bobine (4) et la pièce de départ (3), et peut ainsi être formée par le support (9) et être séparée au moins partiellement par le premier dispositif de séparation (10) ; **caractérisé en ce que** le dispositif (1) comprend au moins un second corps de bobine (14), au moyen duquel le premier dispositif de séparation (10) peut être déplacé vers la matrice (8), **ou en ce que** le dispositif (1) comprend un second corps de bobine (14) et un second dispositif de séparation (15), dans lequel le second dispositif de séparation (15) peut être déplacé au moyen du second corps de bobine (14) vers la matrice (8).

2. Dispositif (1) selon la revendication de brevet 1, dans lequel le premier dispositif de séparation (10) présente une arête de séparation (13) réalisée sur la circonférence, de sorte qu'elle entoure entièrement la première zone partielle (11) et la première zone partielle (11) peut être séparée de la seconde zone partielle (12).

3. Dispositif (1) selon la revendication de brevet 2, dans lequel l'arête de séparation (13) entoure entièrement le support (9).

4. Dispositif (1) selon l'une des revendications de brevet précédentes, dans lequel le dispositif (1) comprend le second corps de bobine (14) et le second dispositif de séparation (10) et dans lequel le second corps de bobine (14) comprend entièrement le premier corps de bobine (4) et les conducteurs électriques (5) des corps de bobine (4, 14) sont disposés dans le plan (6) commun, dans lequel le circuit électrique (7) est réalisé de sorte que les corps de bobine (4, 15) ne peuvent être sollicités que successivement par le courant électrique sous forme d'impulsions.

5. Procédé pour la fabrication d'un composant (2) à paroi mince à partir d'une pièce de départ (3) au moyen d'un dispositif (1) selon l'une des revendications de brevet précédentes, dans lequel le procédé comprend au moins les étapes suivantes
a) fourniture de la pièce de départ (3) et disposition de la pièce de départ (3) entre le premier corps de bobine (4) et la matrice (5) ;
b) sollicitation du premier corps de bobine (4) par le courant électrique sous forme d'impulsions et génération d'une force électromagnétique entre le premier corps de bobine (4) et la pièce de départ (3), de sorte que la pièce de départ (3) est accélérée vers la matrice (5) ;
c) formage de la pièce de départ (3) ; et
d) séparation au moins partielle de la pièce de départ (3).

6. Procédé selon la revendication de brevet 5, dans lequel les étapes c) et d) sont effectuées en parallèle dans le temps.

7. Procédé selon la revendication de brevet 5, dans lequel les étapes c) et d) sont effectuées de manière décalée dans le temps, dans lequel l'étape c) est effectuée au moyen d'un premier courant électrique sous forme d'impulsions et l'étape d) est effectuée au moyen d'un second courant électrique sous forme d'impulsions décalé dans le temps.
